# EUROPEAN PATENT APPLICATION

(11) **EP 4 760 086 A1**
(43) Date of publication of application: **17.06.2026**
(21) Application number: 24889968.4
(22) Date of filing: 11.04.2024
(51) Int. Cl.: F02F 3/28, F02F 3/26, B23P 15/10

(54) **HEAT INSULATION PISTON STRUCTURE AND PREPARATION METHOD THEREFOR**

(30) Priority: 17.11.2023 CN 202311540336
(71) Applicant: Binzhou Donghailong Piston Co., Ltd., Binzhou, Shandong 256600 (CN)
(72) Inventor: JI, Jinyu, Binzhou, Shandong 256600 (CN); ZHANG, Weibin, Binzhou, Shandong 256600 (CN); LIU, Mengmeng, Binzhou, Shandong 256600 (CN); ZHANG, Xinhua, Binzhou, Shandong 256600 (CN); LIU, Hui, Binzhou, Shandong 256600 (CN); LIU, Leilei, Binzhou, Shandong 256600 (CN)
(74) Representative: Chung, Hoi Kan
(86) International application number: PCT/CN2024/087163
(87) International publication number: WO 2025/102594

(57) **Abstract**

A heat-insulating piston structure comprises a head provided at a top end of a piston skirt, the head being provided with a sealed cavity. One end of the full support or the partial support is connected to a first head, and another end is connected to a second head. The full support is porous, while the partial support is mostly solid. The full support is provided with through holes, enabling cavities within the sealed cavity to communicate with each other via the through holes. Meanwhile, the sealed cavity surrounds an entire combustion chamber surface, or is separately provided on a side of an oil passage and/or a side of an inner cavity.

## Description

### Technical Field

The present invention belongs to the field of internal combustion engines, and specifically relates to a heat-insulating piston structure.

### Background Technology

A heat-insulating piston is a type of piston used in internal combustion engines. Its primary function is to reduce the transfer of heat from the combustion chamber to the outside, improve the thermal efficiency of the engine, thereby reducing the temperature of the piston and piston rings, and extending their service life.

As engine emission standards become more stringent, there is a demand for higher peak combustion pressures. As the pressure increases, the temperature and pressure on the piston combustion chamber and top surface also continuously rise, leading to excessively high temperatures in the ring grooves and pin bore.

To prevent excessive temperatures in the ring grooves, pin holes, and skirt areas, a cooling oil cavity is incorporated within a forged steel piston. This design facilitates heat exchange between the piston combustion chamber, crown surface, and cooling oil cavity, thereby reducing temperatures in the ring grooves and skirt areas. However, the presence of the cooling oil cavity leads to significant heat loss from the combustion chamber and top surface, resulting in lower engine thermal efficiency. Approximately 25% of the total energy generated by combustion in the piston chamber is dissipated through the cylinder liner and cooling oil passages. Furthermore, the substantial temperature difference between the high-temperature combustion chamber surface and the cooling oil passages creates significant thermal stress in the piston combustion chamber area, increasing the risk of cracking.

To address the aforementioned issues, existing technologies typically apply a heat-insulating coating on the top surface of the combustion chamber. However, during actual operation, the coating's excessive thinness (only 0.03-0.3 mm) results in an ineffective barrier against heat transfer to the piston rings and skirt. Chinese invention patent CN201610539558 discloses a heat-insulating piston that effectively reduces combustion chamber heat loss. However, during actual operation, the insulation layer blocks heat from the combustion chamber, the temperature of the piston combustion chamber, particularly at the throat, rises sharply. This excessive heat causes cracking and ablation in the sprayed sealing layer at the combustion chamber throat. Furthermore, since the thermal insulation layer is directly cast onto the base material, differing thermal expansion coefficients between the two materials often lead to delamination and detachment of the sealing layer from the main body.

In summary, there is an urgent need for a piston with good heat-insulating effect and high operational safety to solve the existing problems of poor heat insulation by piston heat-insulating coatings and the tendency of heat-insulating layers to develop cracks and damage under high temperatures.

### Summary of the Invention

Embodiments of the present invention provide a heat-insulating piston structure, aiming to solve the problems of poor heat insulation by existing piston heat-insulating coatings and the tendency of heat-insulating layers to develop cracks and damage under high temperatures.

The embodiments of the present invention are implemented as follows:
A heat-insulating piston structure includes:
a head being provided at a top end of a piston skirt;
the head being divided into a first head and a second head, the first head and the second head being connected by welding, a sealed cavity being formed between the first head and the second head, and a support being fixed inside the cavity.

Furthermore, the support extends through the sealed cavity, one end of the support being connected to the first head and another end being connected to the second head.

Furthermore, the support is arranged to be a porous full support or a solid partial support;
the full support is provided with through holes, enabling cavities within the sealed cavity to communicate with each other via the through holes.

Furthermore, the sealed cavity surrounds an entire combustion chamber surface, or is separately provided on a side of an oil passage and/or a side of an inner cavity. Furthermore, the first head is at an upper end of the second head, the second head is provided at an upper end of the piston skirt, and the second head and the piston skirt are connected by welding.

Furthermore, a thickness of the full support is arranged to be 0.5 mm - 5 mm, and a thickness of the partial support is arranged to be 5 mm - 20 mm.

A preparation method for a heat-insulating piston structure includes:
manufacturing semi-finished products for a piston, respectively forging a piston skirt, a first head, and a second head into semi-finished products prior to welding;
forming a support into a specified size by casting and machining;
placing the support between the first head and the second head, and performing compaction and assembly;
performing welding on an assembled head;
welding the head and the skirt to form an integral unit; and
performing heat treatment, precision machining, and surface heat treatment to obtain a finished product.

The beneficial effects achieved by the present invention are:
The present invention achieves heat retention by forming a sealed cavity between the first and second heads, thereby reducing heat loss, enhancing combustion efficiency, minimizing energy dissipation, and lowering the engine's thermal load. This sealed space minimizes heat transfer between the top surface, combustion chamber, cooling oil passages, and internal cavities, providing effective thermal insulation and ensuring high operational reliability.

### Brief Description of the Drawings

FIG. 1 is a schematic structural view of a full support provided by the present invention;
FIG. 2 is a schematic cross-sectional view of a sealed cavity without a support provided by the present invention;
FIG. 3 is a schematic cross-sectional view of a cavity provided on a side of an oil passage according to the present invention;
FIG. 4 is a schematic structural view of a partial support provided by the present invention;
FIG. 5 is a schematic structural view of a cavity surrounding an entire combustion chamber surface provided by the present invention;
FIG. 6 is a schematic structural view of a full support provided by the present invention;
FIG. 7 is a flowchart of a method for manufacturing a heat-insulating piston structure provided by the present invention;
FIG. 8 is a schematic diagram illustrating the processing of a partial support structure provided by the present invention.

Reference numerals in the accompanying drawings are indicated as below:
100: heat-insulating piston structure;
200: head; 210: first head; 220: second head; 230: full support; 240: partial support;
250: cavity; 300: piston skirt.

### Specific Embodiments

To make the objectives, technical solutions, and advantages of the present invention clearer and more comprehensible, the present invention is further described in detail below with reference to the accompanying drawings and embodiments. It should be understood that the specific embodiments described herein are merely intended to explain the present invention and are not intended to limit the present invention.

The present invention incorporates a head and a piston skirt, with the head and skirt manufactured separately to reduce manufacturing complexity and facilitate production. Simultaneously, the first head and the second head are manufactured individually, and a sealed cavity is formed between the first head and the second head. This design minimizes heat loss, enhances combustion efficiency, reduces energy dissipation, and lowers the engine's thermal load. Furthermore, a support extends through the sealed cavity, which can maintain the shape of the sealed cavity. By enclosing the space, heat transfer between the top surface, combustion chamber, cooling oil passages, and inner cavity is minimized, achieving thermal insulation and ensuring high operational reliability.

### Embodiment 1

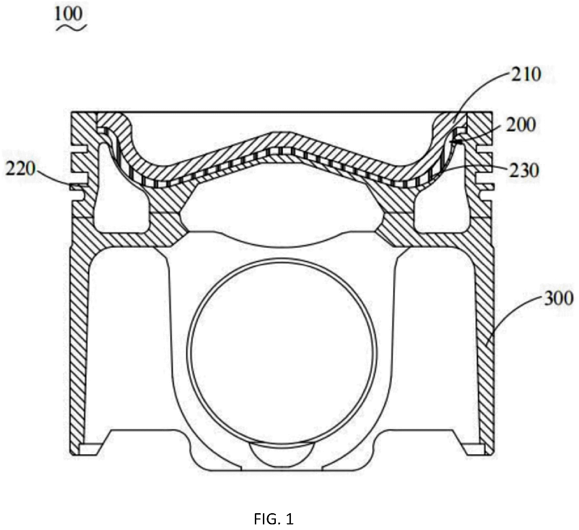

Referring to FIGS. 1, 2, and 5, in an embodiment of the present invention, a heat-insulating piston structure 100 is provided, comprising: a piston skirt 300, where the piston skirt 300 is formed by forging, a head 200 is provided at a top end of the piston skirt 300, and a support is fixed inside the head 200.

The head 200 is divided into a first head 210 and a second head 220. The first head 210 and the second head 220 are connected by welding, and a sealed cavity 250 is formed between the first head 210 and the second head 220. A support extends through the sealed cavity 250.

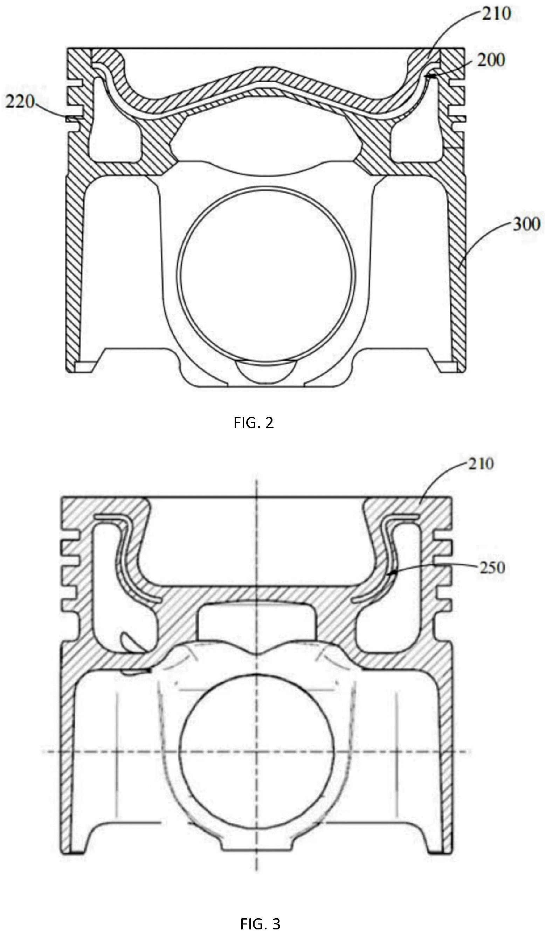

Referring to FIG. 2, one end of the support is connected to the first head 210, and another end is connected to the second head 220. The support is a porous full support 230 or a solid partial support 240. The full support 230 is provided with through holes, enabling cavities within the sealed cavity 250 to communicate with each other via the through holes. The partial support 240 is a solid connecting post, with an upper end of the connecting post connected to the first head 210 and a lower end connected to the second head 220.

In this embodiment, a heat-insulating piston is a piston used inside an engine cylinder to reduce heat transfer and energy loss. To prevent heat loss, conventional heat-insulating pistons apply a ceramic coating on the piston head, which can effectively reduce heat conduction. However, conventional heat-insulating layers are prone to cracking and damage under high temperatures. To address the issue of conventional heat-insulating coating damage, this embodiment provides a heat-insulating piston structure 100. By providing an enclosed cavity 250 in the head 200, heat transfer is blocked. This can minimize heat loss to the area between the piston and piston rings, enhance combustion efficiency, reduce energy dissipation, and lower the engine's thermal load.

Specifically, in one embodiment, a piston skirt 300 is provided, where the piston skirt 300 is formed by forging, a head 200 is provided at a top end of the piston skirt 300, and a support is fixed inside the head 200.

The piston skirt 300 is located between a piston head and a piston pin and is a main body portion of the piston. The piston skirt connects to a connecting rod via the piston pin, enabling the reciprocating motion of the piston within the cylinder. In this embodiment, the piston skirt 300 can be formed by forging or by casting. The specific processing method can be selected according to actual requirements.

Referring to FIG. 1, in yet another embodiment, a support is fixed inside the head 200. The support is used to prevent excessive pressure inside the head combustion chamber from causing severe deformation of the combustion chamber. To avoid heat loss through heat transfer via the support, the full support 230 is made of a material with a thermal conductivity of less than 5 W/ m*K. The full support 230 is provided with a porous structure where the pores are interconnected, and the material is a heat-insulating substance.

The material of the partial support 240 may specifically be a metal, such as alloy steel; it may also be a polymer material, such as polystyrene, polyurethane, etc. The above specific descriptions of the partial support 240 are merely exemplary and should not be construed as limiting this embodiment, and selection can be made based on actual requirements.

The quantity of the partial support 240 can be arranged to be one, two, three, or four. The specific quantity can be selected according to actual requirements. The shape of the partial support 240 can be cylindrical, strip-shaped, etc. The specific shape can be selected based on actual installation requirements.

In another embodiment, the head 200 is divided into a first head 210 and a second head 220. The first head 210 and the second head 220 are connected by welding, and a sealed cavity 250 is formed between the first head 210 and the second head 220. A support extends through the sealed cavity 250.

It is understandable that the head 200 is specifically divided into the first head 210 and the second head 220. The two parts, the first head 210 and the second head 220, can be manufactured separately by stamping or by forging. The first head 210 and the second head 220 are fixedly connected by welding, and the specific welding method can be any type of welding, such as friction welding, electron beam welding, laser welding, etc. After the first head 210 and the second head 220 are welded, a sealed cavity 250 is formed between the first head 210 and the second head 220, and a support extends through the sealed cavity 250.

Specifically, the first head 210 and the piston skirt 300 can be connected by an interlocking connection, or can be fixedly connected by welding. The second head 220 and the piston skirt 300 can be connected by an interlocking connection or by welding. The above describes specific connection methods between the first head 210, the second head 220, and the piston skirt 300, and these descriptions are merely exemplary.

In this embodiment, one end of the support can be connected to the first head 210 by an interlocking connection, and another end of the support can be connected to the second head 220 by an interlocking connection. It is understandable that the support connects the first head 210 and the second head 220, and the support allows a certain cavity 250 to be formed between the first head 210 and the second head 220.

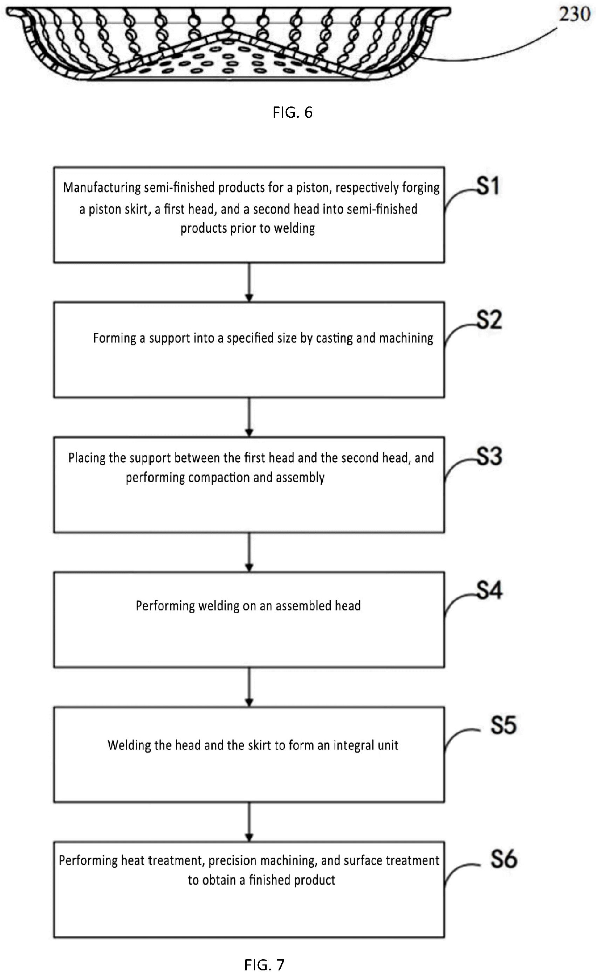

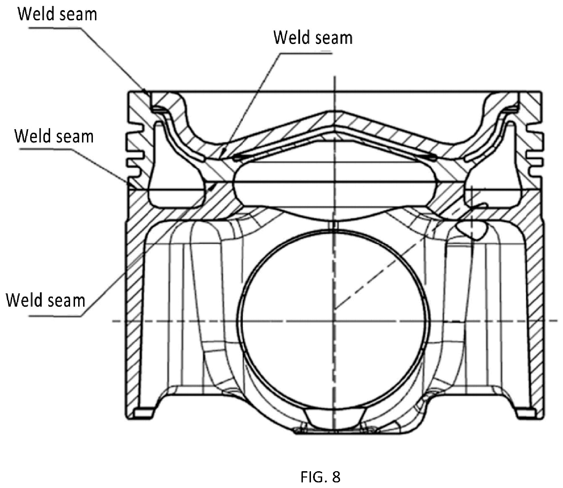

Referring to FIGS. 7 and 8, a preparation method for a heat-insulating piston structure comprises:
S1: manufacturing semi-finished products for a piston, respectively forging a piston skirt, a first head, and a second head into semi-finished products prior to welding;
S2: forming a support into a specified size by casting and machining;
S3: placing the support between the first head and the second head, and performing compaction and assembly;
S4: performing welding on an assembled head;
S5: welding the head and the skirt to form an integral unit; and
S6: performing heat treatment, precision machining, and surface heat treatment to obtain a finished product.

Based on the above structure, during piston manufacturing, the piston skirt 300 can be produced by a forging process. Simultaneously, the first head 210 and the second head 220 can be produced by a forging process, and the support 230 can be produced by a casting or forging process. One end of the support 230 is connected to the first head 210 by an interlocking connection, and another end of the support 230 is connected to the second head 220 by an interlocking connection. Subsequently, the first head 210 and the second head 220 are fixedly connected by welding. Then, the welded head 200 and the piston skirt 300 are fixedly connected by welding.

The head 200 and the piston skirt 300 are manufactured separately, which reduces manufacturing complexity and facilitates production and replacement. Simultaneously, the first head 210 and the second head 220 are manufactured individually, and a sealed cavity is formed between the first head 210 and the second head 220. This design minimizes heat loss, enhances combustion efficiency, reduces energy dissipation, and lowers the engine's thermal load. Furthermore, the support 230 extends through the sealed cavity, which can maintain the shape of the sealed cavity. By enclosing the space, heat transfer between the top surface, combustion chamber, cooling oil passages, and inner cavity is minimized, achieving thermal insulation and ensuring high operational reliability.

### Embodiment 2

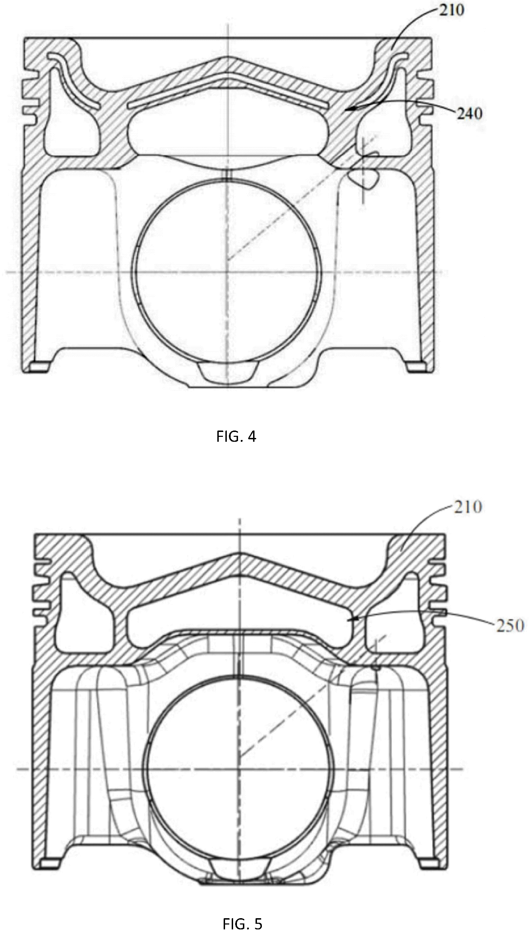

Referring to FIGS. 4 and 5, in an embodiment of the present invention, a sealed cavity 250 surrounds an entire combustion chamber surface, or is separately provided on a side of an oil passage and/or a side of an inner cavity.

In one embodiment, the sealed cavity 250 surrounds the entire combustion chamber surface. The combustion chamber refers to an area within the engine for the combustion of the air-fuel mixture. The combustion chamber portion of the heat-insulating piston accommodates the combustion process. The sealed cavity 250 is provided on the backside of the combustion chamber. The enclosed cavity 250 separates the first head 210 and the second head 220, thereby confining heat within the combustion chamber and top surface, which helps improve combustion efficiency and reduce emissions.

In another embodiment, the sealed cavity 250 is separately provided on a side of an oil passage. The oil passage is a passage or channel for transferring heat and coolant. In the heat-insulating piston, by providing the cavity 250 on a side of the oil passage, the oil passage is isolated from the combustion chamber, reducing channels for downward heat transfer from the head 200 and potentially lowering the cooling demand on the oil passage.

In another embodiment, the sealed cavity 250 is separately provided on a side of an inner cavity. The inner cavity refers to an internal space of the piston for accommodating a piston pin and other components. In the heat-insulating piston, the design of the inner cavity helps reduce piston weight and may improve the piston's heat conduction performance.

In another embodiment, the sealed cavity 250 is provided on a side of the oil passage and a side of the inner cavity. The sealed cavity 250 can reduce channels for downward heat transfer from the head 200, minimizing heat transfer between the top surface, combustion chamber and the cooling oil passage and inner cavity, thereby achieving a heat-insulating effect.

### Embodiment 3

Referring to FIG. 2, in an embodiment of the present invention, a lower end surface of the first head 210 and an upper end surface of the second head 220 are complementarily shaped.

In this embodiment, the lower end surface of the first head 210 and the upper end surface of the second head 220 are complementarily shaped. It is understandable that by providing mutually complementary shapes, after the first head 210 and the second head 220 are welded, a thickness of the sealed cavity 250 formed between the first head 210 and the second head 220 is uniform, which can avoid uneven heating.

A shape of the sealed cavity 250 can be symmetrical about a central axis of the piston. During operation, this symmetry allows forces acting on the piston to be distributed evenly, thereby preventing uneven force distribution and contact with a cylinder wall.

### Embodiment 4

Referring to FIG. 1, in an embodiment of the present invention, the first head 210 is at an upper end of the second head 220. The second head 220 is provided at an upper end of the piston skirt 300, and the second head 220 and the piston skirt 300 are connected by welding.

In this embodiment, the first head 210 is at the upper end of the second head 220, and the second head 220 is provided at the upper end of the piston skirt 300 by welding.

The first head 210 and the second head 220, as well as the second head 220 and the piston skirt 300, are connected by welding. This process is simple, provides reliable connection, and reduces manufacturing difficulty.

### Embodiment 5

Referring to FIG. 4, in an embodiment of the present invention, a thickness of the full support 230 is arranged to be 0.5 mm - 5 mm, and a thickness of the partial support 240 is arranged to be 5 mm - 20 mm.

In this embodiment, the thickness of the full support 230 is arranged to be 0.5 mm - 5 mm, and may specifically be 0.5 mm, 1 mm, 1.5 mm, 3 mm, 4 mm, or 5 mm. The above are specific examples of the thickness of the full support 230. It is understandable that the thickness of the full support 230 in the present invention is not limited to the specific examples listed above.

In another embodiment, the thickness of the partial support 240 is arranged to be 5 mm - 20 mm, and may specifically be 5 mm, 6 mm, 10 mm, 15 mm, or 20 mm. The specific value can be selected according to actual requirements.

By arranging a support with a uniform thickness, heat received by the support can be more evenly distributed, avoiding structural stress caused by uneven heating which could lead to cracks in the device. Meanwhile, configuring the support to have a uniform thickness facilitates its manufacture and reduces manufacturing complexity. The foregoing describes specific embodiments of the present specification. Other embodiments fall within the scope of the appended claims. In some instances, actions or steps recited in the claims can be performed in an order different from that in the embodiments and still achieve desirable results. Additionally, the processes depicted in the accompanying drawings do not necessarily require the particular order or sequential order shown to achieve the desired results. In certain implementations, multitasking and parallel processing are also possible or may be advantageous.

It should be noted that, for the aforementioned method embodiments, they are described as a combination of a series of actions for simplicity. However, a person having ordinary skill in the art should understand that the present application is not limited by the described order of actions, as according to the present application, certain steps may be performed in other orders or simultaneously. Furthermore, a person having ordinary skill in the art should also understand that the embodiments described in the specification are all preferred embodiments, and the involved actions and modules are not necessarily mandatory for the present application.

In the aforementioned embodiments, descriptions of the various embodiments have their own emphases. For parts not described in detail in a certain embodiment, reference may be made to the relevant descriptions in other embodiments.

Detailed descriptions have been made above for the embodiments of the present application with reference to the accompanying drawings. However, the present application is not limited to the above-mentioned embodiments. Various modifications can be made within the knowledge scope of a person having ordinary skill in the art without departing from the spirit of the present application.

## Claims

1. A heat-insulating piston structure, comprising:
a head being provided at a top end of a piston skirt;
the head being divided into a first head and a second head, the first head and the second head being connected by welding, a sealed cavity being formed between the first head and the second head, and a support being fixed inside the cavity.

2. The heat-insulating piston structure according to claim 1, wherein the support extends through the sealed cavity, one end of the support being connected to the first head and another end being connected to the second head.

3. The heat-insulating piston structure according to claim 2, wherein the support is arranged to be a porous full support or a solid partial support;
the full support is provided with through holes, enabling cavities within the sealed cavity to communicate with each other via the through holes.

4. The heat-insulating piston structure according to claim 1, wherein the sealed cavity surrounds an entire combustion chamber surface, or is separately provided on a side of an oil passage and/or a side of an inner cavity.

5. The heat-insulating piston structure according to claim 1, wherein the first head is at an upper end of the second head, the second head is provided at an upper end of the piston skirt, and the second head and the piston skirt are connected by welding.

6. The heat-insulating piston structure according to claim 1, wherein a thickness of the full support is arranged to be 0.5 mm - 5 mm, and a thickness of the partial support is arranged to be 5 mm - 20 mm.

7. A preparation method for a heat-insulating piston structure, comprising:
manufacturing semi-finished products for a piston, respectively forging a piston skirt, a first head, and a second head into semi-finished products prior to welding;
forming a support into a specified size by casting and machining;
placing the support between the first head and the second head, and performing compaction and assembly;
performing welding on an assembled head;
welding the head and the skirt to form an integral unit; and
performing heat treatment, precision machining, and surface treatment to obtain a finished product.
